# EUROPEAN PATENT APPLICATION

(11) **EP 0 732 790 A1**
(43) Date of publication of application: **18.09.1996**
(21) Application number: 96103883.3
(22) Date of filing: 12.03.1996
(51) Int. Cl.: H02G 9/10, H02G 9/04

(54) **Compact cable unit**

(30) Priority: 13.03.1995 JP 52930/95; 28.03.1995 JP 70151/95
(71) Applicant: KAWASAKI STEEL CORPORATION, Chuo-ku, Kobe-shi, Hyogo 651 (JP); NOJI TECH CO., LTD., Hiroshima-shi, Hiroshima 733 (JP); Mizushima General Services Corporation, Kurashiki-shi, Okayama 712 (JP)
(72) Inventor: Ebata, Sadao, c/o Kawasaki Steel Corporation, Kurashiki-shi, Okayama 712 (JP); Noji, Eizo, c/o Noji Tech Co., Ltd., Hiroshima-shi, Hiroshima 733 (JP); Iwao, Shinobu, c/o Mizushima Gen.Services Corp., Kurashiki-shi, Okayama 712 (JP)
(74) Representative: Henkel, Feiler, Hänzel & Partner

(57) **Abstract**

A steel compact cable unit for wiring cables underground comprises a closed box having a partition disposed in its interior. An open box has a window defined by its upper portion. A joint box has connectors to be connected to a plurality of open and closed boxes. The compact cable unit is constructed by connecting the open, closed, and joint boxes together.

## Description

### BACKGROUND OF THE INVENTION

### 1. Field of the Invention

The present invention relates to a compact cable unit for wiring underground electric cables, such as power cables, telephone cables, and CATV cables.

### 2. Description of the Related Art

Conventionally, most electric cables, such as power cables, telephone cables, and CATV cables are wired above ground via service poles. However, wiring cables above ground creates various problems. Wiring electric cables along service poles is unattractive. Roads must be narrowed to accommodate the poles, which creates a traffic hazard. Poles located on sidewalks disturb the flow of pedestrians. Cables stretched between poles hinder fire fighting activities. Poles and above ground cables are prone to damage. Additional injury may result from collapsing poles, falling transformers, and cut cables. To solve these problems, cables may be wired underground by using a compact cable unit.

Recently, a communication network referred to as the "information highway" was proposed for transmitting data. Optical fibers are mainly used for the communication network. However, the optical fibers are wired underground with other cables by using compact cable units.

The use of compact cable units for underground cables is, therefore, becoming more prevalent. Compact cable units are also popular because they reduce installation and maintenance costs.

A compact cable unit includes underground boxes, each box having a predetermined length. The underground boxes are connected to each other. The scale of the compact cable unit is divided into the following three groups: 1) large compact cable unit buried deep underground, and commonly used for natural gas and water service; 2) middle-scale compact cable unit buried fairly deep underground for branching underground cables from large compact cable units; and 3) small compact cable units installed substantially along the surface of the ground for distributing underground cables to terminals.

The small compact cable units are used more frequently than the larger units. The small compact cable boxes can be manufactured from concrete at a relatively reduced cost.

A concrete compact cable unit is disclosed in Japanese Patent Publication No. 6-7726. The concrete compact cable unit includes box-shaped underground channels. Each channel has an upper portion covered with a lid.

However, concrete cable units are not strong enough to survive the shocks created by earthquakes. Specifically, the collapse of the underground boxes cuts the cables disposed therein. Underground boxes are manufactured from metal to solve this problem.

Japanese Utility model Application Laid-Open No. 2-65025 discloses a metal underground box. The metal underground box has flanges disposed on both sides of a rectangular metal duct. The flanges are connected by bolts.

It is more expensive to manufacture compact cable units from metal than from concrete. However, the increased cost of metal compact cable boxes can be offset by mass-production structure. The joints connecting underground boxes must be sealed. Installation costs are increased when numerous types of underground boxes are used, because the joint structure becomes complex.

Additionally, the length of underground wire passages does not always equal the length of one or more underground boxes. Occasionally, underground boxes must be bent to follow a curved underground wire passage. It is conventional practice to manufacture a set of standard underground boxes having a fixed length, and to separately manufacture a set of curved underground boxes.

However, the custom-made underground boxes are expensive to manufacture. Custom-made underground boxes also increase installation costs, since it is difficult to align multiple levels custom boxes.

### SUMMARY OF THE INVENTION

An object of the present invention is to solve the above problems, and provide a compact cable unit having an easily adjustable length, and which can be bent. Another object of the invention is to provide a compact cable unit that can be installed, maintained, and inspected easily.

The present invention is a compact cable unit comprising a closed underground box. The closed underground box has a partition disposed in its interior. An open underground box has an open job window on its upper portion. An underground box having a joint box is provided with connectors. The connectors connect a plurality of open and closed underground boxes. The compact cable unit is constructed by connecting the closed, open, and joint box underground boxes.

The compact cable unit is constructed by connecting different types of metal underground boxes to each other. The types of underground boxes include an underground box of closed structure (hereinafter "a closed box") having a partition disposed in the interior thereof; an underground box of open structure (hereinafter "an open box") having a job window on a surface thereof; and an underground box of joint box structure (hereinafter "a joint box") having connectors that connect a plurality of open and closed boxes.

The closed box comprises a square steel tube. Alternatively, the closed box can comprise a steel sheet having a U-shaped cross-section covered with a steel sheet lid. The closed box has a partition disposed in its interior to divide the cross-sectional area of the steel tube, or hollow box, into a grid shape. The grid shape defines secure passages for cables. The end of the partition is preferably flag welded to the interior of the closed box.

The open box comprises a hollow box formed from a square steel tube. Alternatively, the hollow box can be formed from a steel sheet having a U-shaped cross-section covered with a steel sheet lid. The open box has a job window on its upper surface. The open box also has drawing-out holes in its sides. Communication cables extend through the holes. Preferably, the job window includes a lid frame around its peripheral edge. A lid is insertable into the lid frame via a seal member. Preferably, the lid is provided with a sensor for detecting the opening and closing of the window and a locking mechanism. The drawing-out holes can be plugged with easily detachable rubber blind caps.

The joint box comprises a polygonal hollow box formed from steel sheet. The box has a job window on its upper surface. A plurality of the connectors are provided on the sides of the joint box. The sides of the joint box define holes. Communication cables extend through the holes. The window and the drawing-out holes are arranged similarly to those of the open box. The connector connects the joint box to closed or open boxes via a seal member. However, a blind plate is attached to the connector via the seal member when the joint box is not connected to closed or open boxes. The blind plate defines drawing-out holes.

Each underground box has a fixed length. However, an underground box having an adjustable length may be also be provided.

The compact cable unit is constructed by connecting the closed, open, and joint boxes. Horizontal and vertical wire passages are created when closed or open boxes are connected to the connectors on the sides of the joint boxes. The compact cable unit is strong enough to protect communication cables from the shocks of earthquakes, since it is composed of steel sheet or pipe.

### BRIEF DESCRIPTION OF THE DRAWINGS

FIG. 1 is a perspective view showing the construction of a compact cable unit according to the present invention.

FIG. 2 is a perspective view, partly in cross-section, of a closed box.

FIG. 3 is a cross-sectional view showing another embodiment of a closed box.

FIG. 4 is a perspective view, partly in cross-section, of an open box.

FIG. 5 is a perspective view, partly in cross-section, of a lid of the open box of Fig. 4.

FIG. 6 is an enlarged perspective view of a member disposed in the open box of Fig. 4.

FIG. 7 is a perspective view of a joint structure including a frame member.

FIG. 8 is a perspective view of an adjustable joint structure.

FIG. 9 is a plan view of the adjustable joint structure of FIG. 8.

FIG. 10 is a perspective view of a joint box.

FIG. 11 is an enlarged cross-sectional view of a connector connected to a closed box.

FIG. 12 is a perspective view of a compact cable unit.

FIG. 13 is a perspective view, partly in cross-section, of an adjustable box.

FIG. 14 is a perspective view showing another embodiment of an adjustable box.

FIG. 15 is a perspective view showing an open box having a box supporter welded to the lower edge of a flange.

FIG. 16 is a perspective view of three bent boxes connected together, each box having a bending angle of 10°.

FIG. 17 is a perspective view of three bent boxes connected to offset the bending angle.

### DESCRIPTION OF PREFERRED EMBODIMENTS

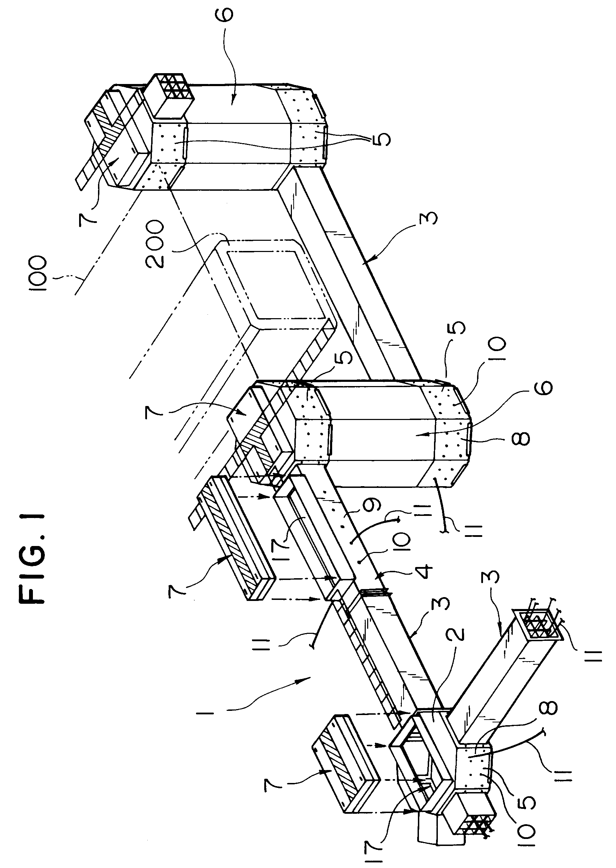

FIG. 1 is a perspective view showing the construction of a compact cable unit 1 according to the present invention. A joint box 2 has connectors 5 facing eight directions. A closed box 3 and an open box 4 are connected to the joint box 2 by a joint structure.

Multi-layered joint boxes 6 include a plurality of hollow, octagonal boxes. Multi-layered joint boxes 6 include two-layered connectors 5. The two-layered connectors enable a wire passage to be run around obstructions.

The connectors 5 on the lower layer, as shown in Fig. 1, are connected to a closed box 3. The joint boxes 2 and 6 and the open box 4 have windows 17. The windows 17 are covered with lids 7. Blind plates 8 are provided on the sides of the joint boxes 2 and 6 and the open box 4. Blind plates 6 define drawing-out holes 10. Communication cables 11 extend through the drawing-out holes 10.

The multi-layered joint boxes 6, 6 each composed of an octagonal prism extending upward and downward and having two-layered connectors 5 are disposed at the extreme end of the open box 4 on the opposite sides of a road 100 and a tap water/sewer system 200 (refer to a two-dot-and-dash line in FIG. 1) to take a circuit round the road 100 and tap water/sewer system, and the connectors 5 on the lower layer are connected to each other through a closed box 3.

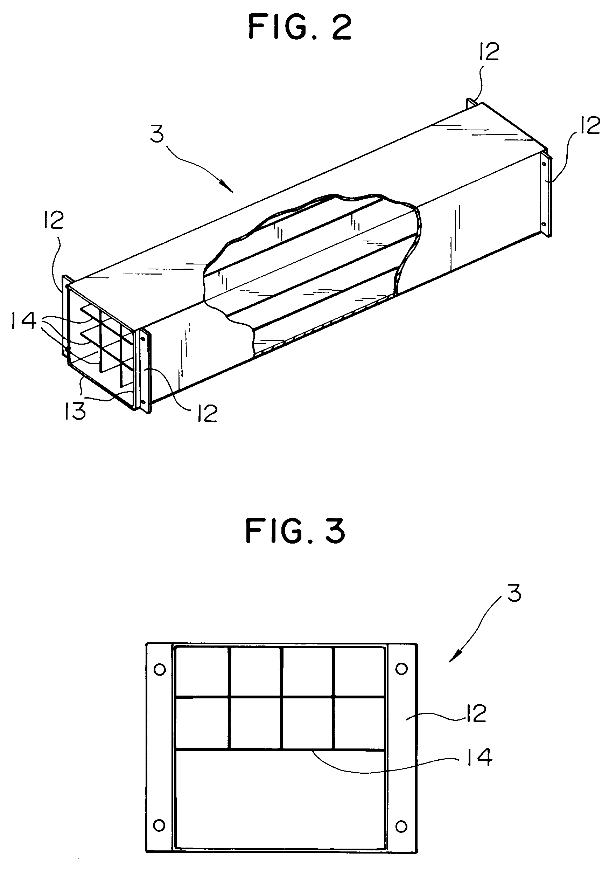

FIG. 2 is a perspective view, partly in cross-section, of a closed box 3. The closed box 3 is manufactured from a square steel tube. Ends 13 having connecting flanges 12 are inserted into the closed box 3. The underground boxes are connected with the ends 13 abutting each other.

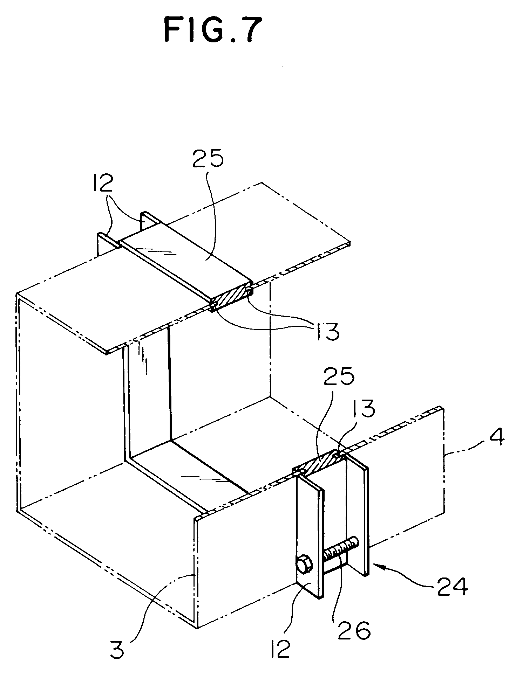

As shown in FIGS. 7, 8 and 9, a predetermined joint structure is inserted between connecting boxes. The flanges 12 of the underground boxes are connected to the joint structure by bolts. A partition 14 is fixed to the interior of the closed box 3 by plug welding. Communication cables extend through the partition 14. The cross-sectional shape of the partition 14 may be divided into large sections and small sections, as shown in FIG. 3.

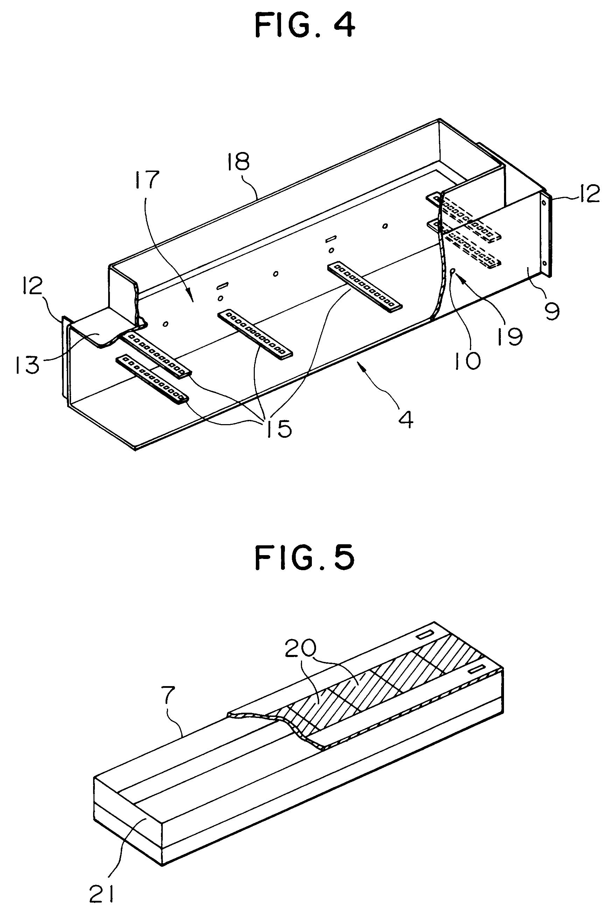

FIG. 4 is a perspective view, partly in cross-section, of an open box 4. The open box 4 is manufactured from a square steel tube. The exterior of the open box 4 is similar to the closed box 3, except for the following elements. First, the open box 4 has a job window 17 on its upper surface. The job window 17 includes a peripheral edge which can endure an earth load. The job window is used for pulling communication cables, as well as for maintenance and inspection. The job window 17 is covered with the lid 7. The lid 7 is inserted into a lid frame 18. The lid frame 18 is disposed around the periphery of the opening. Second, the open box does not include a partition 14 since a partition would impede maintenance and inspection. Instead, members 15 are detachably mounted in the interior of the open box 4. Third, drawing-out holes 10 are provided in the sides 9 of the open box 4. Communication cables extend through the drawing-out holes 10. The holes 10 can be plugged with rubber blind caps 19.

FIG. 5 is a perspective view, partly in cross-section, of the lid 7. The lid 7 has Braille blocks 20 bonded on its upper surface. The lid 7 covers the job window 17 upon insertion into the lid frame 18. The lid 7 is locked by a locking mechanism. A sensor 21, in contact with the lid frame 18 under pressure, is disposed on a side of the lid 7. When the lid 7 is removed, the sensor 21 no longer contacts the lid frame 18 and an alarm is issued. The compact cable unit 1 is installed such that the line of Braille panels extends along a sidewalk. Such an installation provides convenient maintenance and inspection. The Braille blocks 20 bonded on the lid 7 are disposed so as not to obstruct the line of existing Braille blocks and the locking mechanism. The sensor 21 and the lid 7 prevent the job window 17 from being opened.

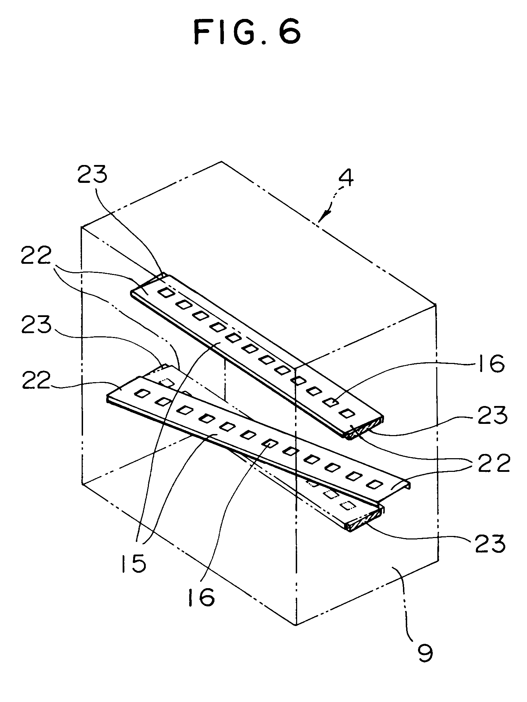

FIG. 6 is an enlarged perspective view of a member 15 disposed in an open box 4. The open box 4 is not provided with a partition 14. A partition would obstruct communication cables 11 extending through the box 4. Instead, the member 15 is provided to support the communication wires. The communication wires are supported by passing a band, a wire or the like through holes 16 defined in the member as shown in FIG. 6. The communication cables would bend under their own weight without such structural support.

The member 15 is disposed in the interior of the open box 4 to support the cables. The member 15 is easily mounted by abutting the ends 22 against the sides of the interior of the box 4. The ends 22 of the member 15 are cut obliquely and are parallel with each other. The member 15 is turned in a horizontal direction with respect to hooks 23 mounted on the inner surfaces of the box 4.

An operator can handle the communication cables within the box 4 by opening the job window 17. The operator can pull the communication cables 11 through the drawing-out holes 10, and wire them from the compact cable unit 1 to external terminals. The drawing-out holes 10 are plugged with rubber blind caps 19 when they are not used. The closed and open boxes 3 and 4 may be formed as a tube by combining four steel sheets having a substantially U-shaped cross-section with a steel sheet lid.

As shown in FIG. 7, the closed and open boxes 3 and 4 can be directly connected to each other by a joint structure 24. A seal member 25 is interposed therebetween and held by bolts 26. The bolts 26 connect flanges 12.

In the joint structure 24, the underground boxes are connected to each other by the bolts 26. The seal member 25 is connected to the inserting ends 13 to be abutted. The seal member 25 is elastic since it is manufactured from rubber or a similar substance. This elasticity enables a wiring passage to be bent, depending upon how much the right and left bolts 26 are tightened. The seal member 25 fitted to the inserting ends 13 is important for providing a high sealing property. The beforementioned joint structure 24 provides sufficient seal even though it has a simple construction. The exterior of the seal member 25 may also be covered with a steel sheet to provide a tight seal.

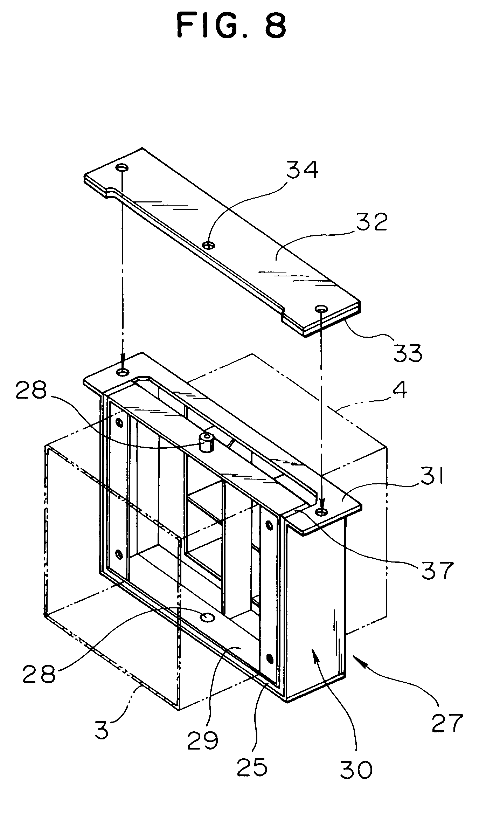

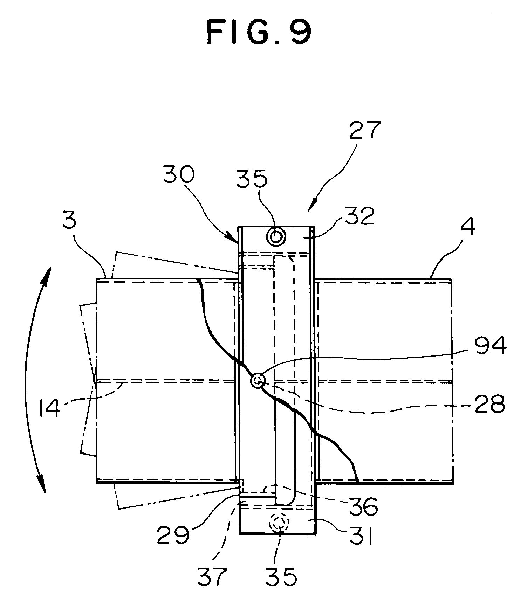

FIGS. 8 and 9 show an adjustable joint structure 27. FIG. 8 is a perspective view of an adjustable joint structure 27, and FIG. 9 is a plan view of FIG. 8.

The adjustable joint structure 27 comprises an inner frame member 29 having a square cross-section. An outer frame member 30 has a cross-section that is slightly larger than the inner frame member 29. The outer frame member 30 can be divided into two portions, a support frame 31 that includes a bottom surface and both sides, and a closing plate 32 that includes an upper surface. Inserting holes 34 are defined in the bottom surface of the support frame 31 and in the closing plate 32. A swing shaft 28 is inserted through the inserting holes 34. The closing plate 32 is connected to the support frame 31 by bolts 35. The swing shaft 28, disposed at the bottom surface of the inner frame member 29, is inserted into the inserting hole 34 defined in the support frame 31. The swing shaft 28, disposed at the upper surface of the inner frame member 29, is inserted into the inserting hole 34 defined in the closing plate 32. The upper and lower surfaces of the swing joint structure 27 are sealed by seal members 33. The seal members 33 are held between the lower surface of the inner frame member 29 and the upper surface of the support frame 31. The seal members 33 are held between the upper surface of the inner frame member 29 and the closing plate 32 when the swing joint structure 27 is assembled. The sides are sealed by causing the outer surfaces of the inner frame member 29 to contact, under pressure, the seal members 37 fixed on the inner surfaces of the support frame 31 of the outer frame member 30.

As shown in FIG. 9, the swing joint structure 27 is provided with a swing shaft 28 disposed in a longitudinal direction. The swing joint structure 27 enables a closed or open box to be adjustable in a lateral direction. Each of the sides of the joint structure 27 is sealed. A contact portion 36, having a projected-arc-shaped cross-section formed on the exterior of the inner frame member 29, contacts seal member 37 under pressure. Seal member 37 has a recessed-arc-shaped cross-section and is fixed to the interior of the outer frame member 30. The contact portion 36 contacts the seal member 37 in an unchanged state when the closed box 3 or open box 4 is adjusted. The upper surface and lower surface of the joint structure 27 can be sealed even by ordinary contact surfaces. The seal member 37 maintains sliding contact with the outer surface of the inner frame member 29, or the inner surface of the outer frame member 30, even if the closed or open box is adjusted in a horizontal direction.

The entire compact cable unit 1 swings following the shock of an earthquake, while avoiding the concentration of a partial load. Even if the compact cable unit 1 is broken by the shock of an earthquake, it is broken only at the swing shaft 28. Communication cables are thereby protected.

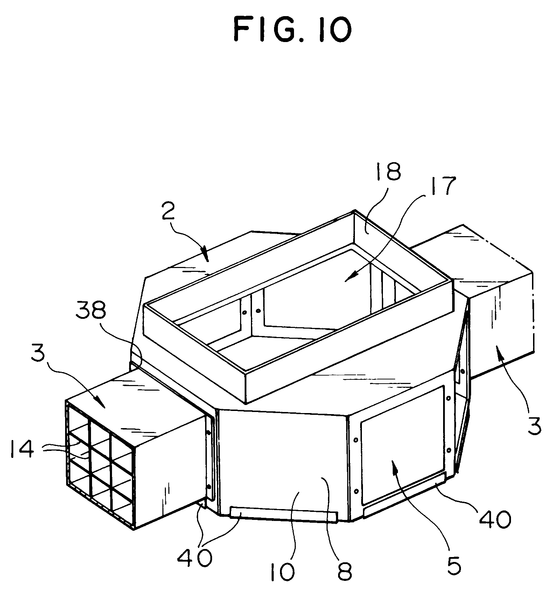

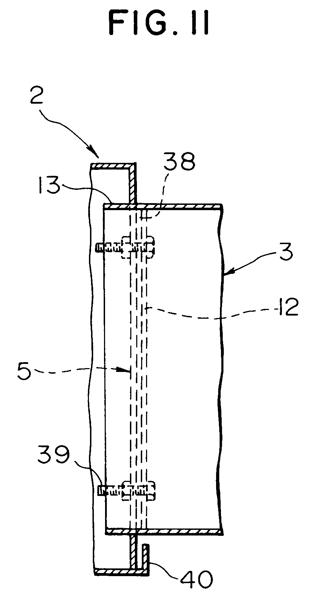

FIG. 10 is a perspective view of a joint box 2. FIG. 11 is an enlarged side cross-sectional view of the connector 5 connected to the closed box 3. The joint box 2 includes ten steel sheets that constitute an upper surface, a lower surface, and sides. The upper surface has a job window 17 similar to that of the open box 4. Each of the sides has an open connector 5. The direction of a wiring passage can be bent by connecting a closed or open box to the connector 5. In the multi-layered joint box 6 provided with the layered connectors 5 shown in FIG. 1, wiring passages can extend vertically and horizontally. Although this embodiment describes the connectors 5 as facing eight directions, numerous other shapes can also be used.

As shown in FIG. 10, blind plates 8 are connected to connectors 5 by bolts 39 through seal members 38 to provide a seal. Drawing-out holes 10 are defined in the blind plate 8. Communication cables 11 extend through the holes 10. The holes are plugged with rubber blind caps 19 when they are not being used. When the blind caps 19 are removed from the holes 10, communication cables can extend therethrough and be wired to terminals. The connector 5 is provided with a receiving portion 40 into which the blind plate 8 is inserted. The blind plate 8 is inserted at the lower portion of the receiving portion.

As shown in FIG. 11, closed and open boxes are connected to the connector 5 in such a manner that the inserting end 13 of the box 3 or 4 is inserted into the connector 5. The flange 12 of the inserting end 13 is connected to the sides of the peripheral edges of the connector 5 by bolts 39 through the seal member 38. Alternatively, the box may be connected to the connector 5 through the joint structure 24. Flexibility of the compact cable unit 1 is enhanced by using the beforementioned connecting structure with the end of each underground box. The installation cost of the compact cable unit is also reduced.

The underground boxes are manufactured to have predetermined lengths. Therefore, the total length of the underground box assembly may be longer or shorter than the length of a wiring passage. This length differential can be equalized by connecting joint structures 24 and 27 in series, as shown in FIG. 7 and FIG. 8. Alternatively, an adjustable underground box can equalize the length differential.

The compact cable unit 1 can be constructed in vertical and horizontal directions by using joint box 6 having multi-layered connectors. The position of the joint box that serves as the hub of a wiring passage is roughly determined. An entire wiring passage is subsequently constructed in accordance with the estimated hub position. Connecting existing underground boxes will rarely provide the exact length of the wiring passage. An adjustable underground box can equalize any discrepancy. Adjustable underground boxes, therefore, provide for direct wiring passages via the shortest possible distance.

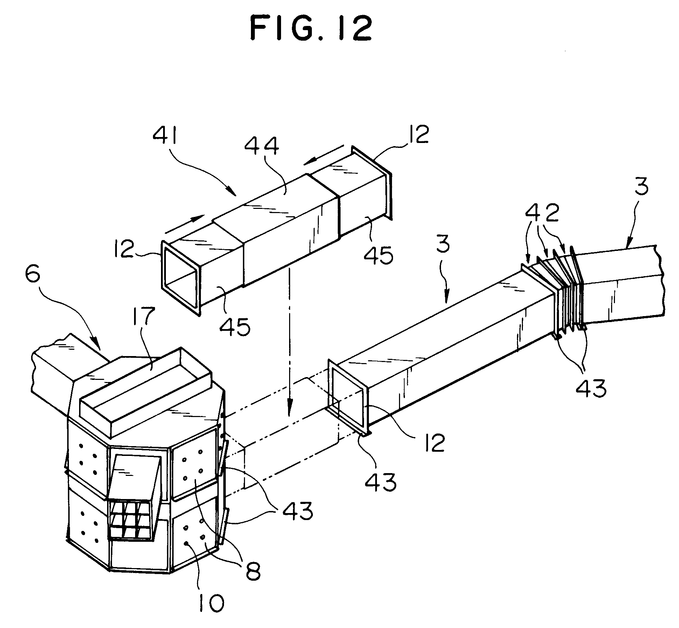

FIG. 12 is a perspective view showing a compact cable unit 1 constructed with a multi-layered joint box 6, an adjustable underground box 41, a closed box 3, and a bent underground box 42. The underground boxes 6, 41, 3, and 42 are connected by bolts. The bolts are not shown in the drawing. In the embodiment shown in FIG. 12, the multi-layered joint box 6 serves as the hub of the wiring passage. The adjustable underground boxes 41 and closed boxes 3 extend from the multi-layered joint box 6.

As shown in FIG. 12, the exterior of the multi-layered joint box 6 forms an octagonal, hollow box. The connectors are disposed on two stages, and are oriented to face eight directions. The connectors are typically sealed by the blind plates 8. Each of the connectors 5 has a box supporter 43 that projects from its lower edge. The adjustable underground box 41 and closed box 3 are connected by bolts. The blind plate 8 contacts the connector 5 through a seal, and abuts the lower edge of the flange 12 against the box supporter 43.

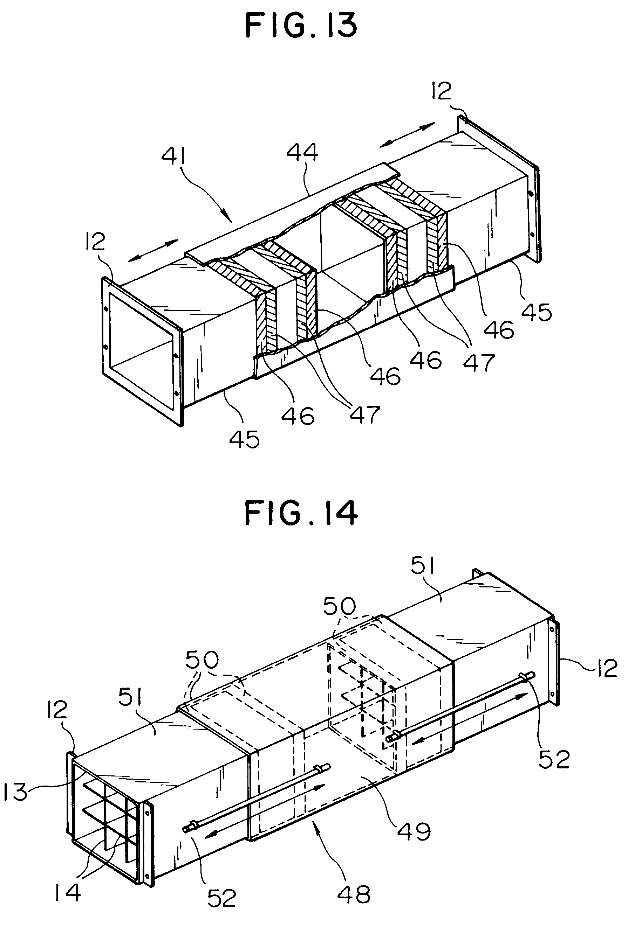

FIG. 13 is a perspective view, partly in cross-section, of the adjustable underground box 41. The adjustable underground box 41 is used when closed or open boxes cannot adequately cover the length of the wiring passage. Hollow boxes 45 are inserted internally from both ends of an externally inserting hollow box 44. The length is adjusted by placing seal members 46 and stoppers 47 in the interval therebetween.

The stopper 47 is held between the seal members 46. The stopper 47 abuts against the hollow box 45 when the internally inserting hollow box 45 is expanded.

Seal members 46 are attached at both ends of the four inner peripheral surfaces of the externally inserting hollow box 44. Stopper members 47 are attached to the four inner peripheral surfaces in the interior of the seal members 46. Stoppers 47 are attached to the four outer peripheral surfaces of the internally inserting hollow box 45, at positions to be engaged with the stoppers 47 described above. Seal members 46 are attached to the exterior of the four outer peripheral surfaces of the stoppers 47. The beforementioned arrangement of stoppers 47 and seal members 46 enables the stoppers 47 to be abutted against the open box 45 prior to the seal members 46, even if the open box is fully expanded. This arrangement, therefore, prevents the seal members 46 from being deformed or damaged.

As shown in FIG. 13, the length of the adjustable underground box 41 is set by connecting the multi-layered joint box 6 to the closed or open box. The internally inserting hollow box 45 is inserted into the externally inserting hollow box 44 to permit the internally inserting hollow box 45 to move in an advancing or retracting direction. The internally inserting hollow box 45 is able to advance or retract in response to an external load.

FIG. 14 is a perspective view showing an adjustable underground box 48. Adjustment portions 51, each having an outside view obtained by shortening the closed box 3 shown in FIG. 2, are provided at both ends of an intermediate member 49. Both ends of the intermediate member 49 have an outside view obtained by lengthening the joint structure 24, as shown in FIG. 7. Seal members 50 are provided so that the adjustment portions can advance and retract along guide bars 52. The guide bars 52 are disposed on the outer sides of the assembly. The adjustment member 51 can be disposed on the right or left side. The partition 14 is provided to support communication cables. The adjustable underground box 48 is used with the adjustable underground box 41 shown in FIG. 12.

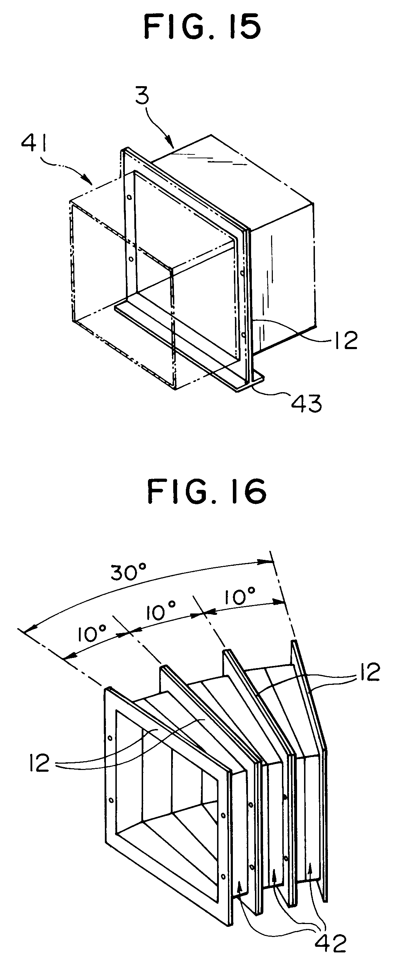

FIG. 15 is a perspective view, partially in cross-section, of the box supporter 43 welded to the lower edge of the flange. A sheet member is welded horizontally to the lower edge of the flange 12 or connector 5. This arrangement provides support for the lower edge of the flange 12 that is disposed at the end of the adjustable underground box 4. The box supporter 43 can be formed by bending horizontally the lower edge of the flange 12. The box supporter 43 is integral with the flange 12. This arrangement obviates welding and decreases manufacturing costs of the box. Further, the box supporter 43 may be formed by welding horizontally the sheet member to the upper edge of the flange 12 or connector 5. The box supporter 43 decreases the shearing force on the bolts and prevents the underground box from tipping over. Positioning the box supporter 43 at the lower edge of the flange 12 provides another advantage. The adjustable, closed, or open boxes can be connected to each other or to a joint box by causing the flange 12 of the adjustable underground box 41 or 48 to be abutted against the box supporter 43. This arrangement reduces installation costs.

FIG. 16 is a perspective view of three sets of bent underground boxes 42 connected together, each box having a bending angle of 10°. The bent underground box 42 is formed by bending a short, hollow box. A compact cable unit having a curved wiring passage is constructed by connecting a plurality of bent underground boxes. Each box can have the same or different bending angle.

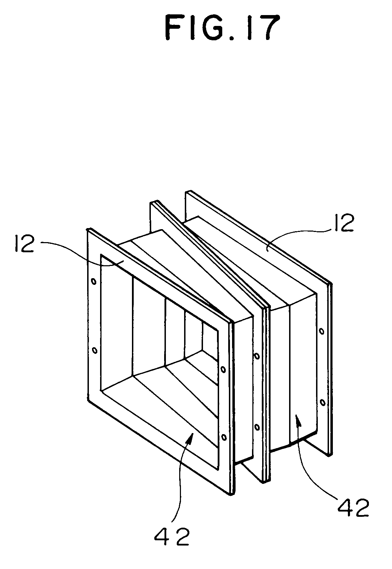

FIG. 17 shows bent underground boxes 42 connected together. Each of the boxes have the same bending angle. The boxes are connected to alternate the direction of the bend. This arrangement provides a substantially straight wiring passage. A unit box having a bending angle of 0° can be used in place of an adjustable box to cover the length differential, which is especially useful since adjustable underground boxes have a limited range of extension.

Although the underground boxes of the present invention are shown as steel underground boxes having a rectangle cross-section, underground boxes formed from round steel pipes can also be used.

The invention provides a safe compact cable unit that can be manufactured inexpensively. The invention also saves installation costs. As a result, the compact cable unit enables cables, such as optical fibers, to be run underground inexpensively.

## Claims

1. A compact cable unit for wiring cables underground, comprising:
a closed box having an interior, and a partition disposed in said interior of said closed box;
an open box having an upper portion, and a window defined by said upper portion of said open box; and
a joint box having connectors, said connectors being connectable to said closed and open boxes, wherein said compact cable unit is constructed by connecting said closed, open, and joint boxes together.

2. A compact cable unit according to claim 1, wherein said closed box is a square steel pipe, or a hollow box including a steel sheet having a U-shaped cross-section, and covered with a steel sheet lid, said closed box having connecting flanges on its ends, and a partition disposed in the interior of said closed box that divides a cross-sectional area of said hollow box into grid-shaped sections said partition defining passages through which a plurality of cables pass.

3. A compact cable unit according to claim 1, wherein said open box is a square steel pipe, or a hollow box including a steel sheet having a U-shaped cross-section, and covered with a steel sheet lid, said open box having connecting flanges on its ends, and said window defined on the upper portion thereof which can be opened and closed by a lid, the sides of said open box defining cable drawing-out holes.

4. A compact cable unit according to claim 1, wherein said joint box is hollow and polygonal, said joint box includes a steel sheet, a job window defined on the upper surface thereof which can be opened and closed by a lid, and connectors to be connected to said open and closed boxes which are disposed at the sides of said joint box, and the sides of said joint box define cable drawing-out holes.

5. A compact cable unit according to claim 2, wherein a plurality of boxes are engaged with each other, a seal disposed on the outer surface of an internally inserted hollow box is in sliding contact with an inner surface of an externally inserted hollow box, or a seal disposed on an outer surface of said externally inserted hollow box is in sliding contact with the outer surface of said internally inserted hollow box, whereby the length of the box is adjustable.

6. A compact cable unit according to claim 2, wherein a box supporter is disposed on an edge of the connecting flange of said closed or open box to support the edge of said box to be connected.

7. A compact cable unit according to claim 1, wherein said open and closed boxes are connected to each other through a joint structure or a bent underground box.

8. A compact cable unit according to claim 7, comprising a joint structure which includes an elastic seal member having a groove, the inserting end of said open or closed box is fitted to said elastic seal member, and bolts for tightening said elastic seal member.

9. A compact cable unit according to claim 7, including a joint structure having an inner steel frame member and an outer steel frame member, said outer frame member is integrally assembled with said inner frame member through a swing shaft provided with said inner frame member or said outer frame member whereby said inner frame member is loosely inserted into said outer frame member and the outer surface of said inner frame or the inner surface of said outer frame member contacts under pressure a seal member fixed to the inner surface of said outer frame member or a seal member fixed to the outer surface of said inner frame member.

10. A compact cable unit according to claim 7, including a bent underground box having a bent, short hollow box having connecting flanges on both ends.
